# FASCICULE DE BREVET EUROPEEN

(11) **EP 1 849 283 B1**
(45) Date de publication et mention de la délivrance du brevet: **13.05.2009**
(21) Numéro de dépôt: 06710304.4
(22) Date de dépôt: 01.02.2006
(51) Int. Cl.: H04L 29/06, H04L 12/18, H04L 12/28

(54) **PROCEDE ET DISPOSITIF D'ECHANGE DE DONNEES**
DATENAUSTAUSCHVERFAHREN UND EINRICHTUNG
DATA EXCHANGE METHOD AND DEVICE

(30) Priorité: 01.02.2005 FR 0501060; 13.04.2005 FR 0503709
(43) Date de publication de la demande: 31.10.2007
(73) Titulaire: AWOX, 34830 Clapiers (FR)
(72) Inventeur: MOLINIE, Alain, 34830 Clapiers (FR); LAVIGNE, Eric, 34830 Clapiers (FR); LECLAIRE, Vincent, 34830 Clapiers (FR)
(86) Numéro de dépôt international: PCT/IB2006/000187
(87) Numéro de publication internationale: WO 2006/082498

(56) Documents cités:
- WO-A-02/054769
- US-A1- 2004 070 491
- US-A1- 2004 088 731
- US-A1- 2004 121 725
- US-A1- 2004 193 609
- US-B1- 6 182 094

## Description

La présente invention concerne un procédé et un dispositif d'échange de données. Elle s'applique, en particulier à l'échange de données entre des sources et diffuseurs de signaux disparates sur un réseau domestique, par exemple entre une chaîne musicale, un téléviseur, un terminal informatique, une télécommande.

Chaque utilisateur de matériels audiovisuels et d'informatique peut disposer de nombreuses sources de données qui représentent, de manière différentes, les mêmes entités physiques, par exemple des signaux d'image ou des signaux sonores.

Ainsi, les magnétoscopes, appareils photo numériques, lecteur de disque compact, visiophones, interphones vidéo, systèmes de vidéo-surveillance sont tous capables de fournir des informations représentatives d'images mais sur des supports et sous des formats si différents qu'ils ne peuvent que très partiellement être échangés. L'utilisateur ne peut donc pas choisir n'importe quelle sources et n'importe lequel des moyens d'affichage d'image pour accéder à cette information.

Le document US 2004/088731 décrit un procédé et un dispositif d'échange de données entre des appareils reliés à un réseau. Le document US 6,182,094 décrit un gestionnaire de session centralisé qui génère une page qui comporte tous les contenus d'un réseau. Cependant, l'utilisateur de chacun de ces systèmes ne peut pas choisir n'importe quelle sources et n'importe lequel des moyens d'affichage d'image et/ou de diffusion de sons pour accéder à un média.

La présente invention vise à remédier à ces inconvénients.

A cet effet, selon un premier aspect, la présente invention vise un procédé d'échange de données entre des appareils reliés à un réseau, comportant :
- une étape de recherche, par chacun d'au moins deux appareils, d'au moins un type de médias représentatifs d'au moins une entité physique, directement accessibles par ledit appareil,
- une étape de transmission, par chaque appareil ayant effectué ladite étape de recherche à au moins un autre appareil susceptible de traiter ledit type de média, d'une liste représentative de médias trouvés sur ledit appareil au cours de l'étape de recherche; caractérisé en ce qu'il comporte, en outre :
   - une étape d'agrégation, par chaque appareil ayant effectué ladite recherche, des listes de médias trouvés et/ou reçues indépendamment de l'appareil où se trouvent lesdits médias.

Ainsi, l'utilisateur dispose virtuellement, sur chaque appareil effectuant l'étape d'agrégation, d'un ensemble de médias qui sont disponibles, indépendamment de l'appareil auquel il a accès.

Ainsi, l'architecture n'est pas centralisée mais basée sur la disponibilité de services sur le réseau. Chaque appareil envoie une requête générale à laquelle répondent toutes les entités susceptibles de rendre le service requis et le fonctionnement est dynamique.

Selon des caractéristiques particulières, au cours de l'étape d'agrégation, les listes agrégées sont rangées par entité physique.

Ainsi, les fichiers sons sont rangés dans une première catégorie, les fichiers d'images fixes sont rangés dans une deuxième catégorie, les fichiers d'images animées sont rangés dans une troisième catégories, par exemple.

Selon des caractéristiques particulières, au cours de l'étape d'agrégation, les listes agrégées sont rangées par type de média.

Ainsi, les fichiers compressés sont rangés en différentes catégories selon les formats de compression ou de codage qui ont été utilisés.

Selon des caractéristiques particulières, au cours de l'étape de recherche, les médias affectés d'une interdiction ou d'une limitation de diffusion, ne sont pas pris en compte.

Ainsi, par exemple, les films conservés en mémoire non volatile peuvent être protégés contre des copies pirates et ne restent lisibles que sur chaque appareil qui lit ladite mémoire non volatile.

Selon des caractéristiques particulières, au cours de l'étape d'agrégation, la liste agrégée comporte, pour chaque média, un pointeur qui représente la localisation dudit média sur le réseau.

Grâce à ces dispositions, chaque appareil ayant effectué une étape d'agrégation peut accéder à chaque média individuellement.

Selon des caractéristiques particulières, au cours de l'étape d'agrégation, la liste agrégée comporte, pour chaque média, une interface susceptible de traiter ledit média.

Grâce à ces dispositions, le traitement de chaque média de la liste peut être effectué par l'appareil effectuant ladite agrégation.

Selon des caractéristiques particulières, pour au moins un média mettant en oeuvre des liens hypertextes, au cours de l'étape de recherche, on recherche des pages accessibles par l'appareil effectuant la recherche et, au cours de l'étape de transmission, on transmet une liste représentative de ces pages.

On observe que ces pages, par exemple des pages de sites accessibles sur le réseau internet, peuvent être des pages de sites récemment visités, des pages enregistrées dans les pages favorites et des pages sur lesquelles des fenêtres sont ouvertes sur l'appareil.

Selon des caractéristiques particulières, pour au moins un média mettant en oeuvre des liens hypertextes, au cours de l'étape de recherche, on recherche des liens accessibles sur une page d'une fenêtre ouverte par l'appareil effectuant la recherche et, au cours de l'étape de transmission, on transmet une liste représentative de ces liens.

Selon des caractéristiques particulières, le procédé tel que succinctement exposé ci-dessus comporte une étape de sélection, pour au moins un appareil de diffusion d'un média, d'un média représenté dans la liste agrégée.

Selon des caractéristiques particulières, le procédé tel que succinctement exposé ci-dessus comporte une étape de sélection d'un appareil de diffusion d'un média.

Grâce à ces dispositions, l'utilisateur peut choisir d'afficher, sur un téléviseur, des pages auxquelles accède son ordinateur personnel ou des photos conservées dans son appareil photo numérique, par exemple, par une simple sélection dans la liste agrégée.

Selon des caractéristiques particulières, ladite étape de sélection d'un média comporte une étape de sélection par une télécommande manuelle.

Selon des caractéristiques particulières, au cours de l'étape de sélection par une télécommande manuelle, on fait émettre des signaux lumineux et des signaux radio à ladite télécommande.

Grâce à ces dispositions, plusieurs récepteurs de signaux peuvent simultanément recevoir les commandes émises par la télécommande manuelle, même s'ils sont optiquement masqués.

Selon des caractéristiques particulières, au cours de l'étape de sélection par une télécommande manuelle, on affiche, sur ladite télécommande, des images en trois dimensions représentatives des appareils susceptibles de diffuser au moins un type de média.

Selon des caractéristiques particulières, au cours de l'étape de sélection par une télécommande manuelle, on émet une requête pour que chaque appareil à portée de la télécommande fournisse une réponse l'identifiant.

Selon des caractéristiques particulières, au cours de l'étape de sélection d'un média, on met en oeuvre des touches de flèches et une touche de validation.

Selon des caractéristiques particulières, à la suite de l'étape de sélection de média, l'appareil qui donne l'accès le plus direct au média sélectionné transmet ledit média à l'appareil sélectionné pour diffuser ledit média.

Selon un deuxième aspect, la présente invention vise un dispositif d'échange de données entre des appareils reliés à un réseau, caractérisé en ce qu'il comporte, dans au moins deux desdits appareils :
- un moyen de recherche d'au moins un type de médias représentatifs d'au moins une entité physique, directement accessibles par ledit appareil ;
- un moyen de transmission, à au moins un autre appareil susceptible de traiter ledit type de média, d'une liste représentative de médias trouvés sur ledit appareil par le moyen de recherche et
- un moyen d'agrégation des listes de médias trouvés et/ou reçues indépendamment de l'appareil où se trouvent lesdits médias.

Ainsi, l'utilisateur dispose virtuellement, sur chaque appareil effectuant l'étape d'agrégation, d'un ensemble de médias qui sont disponibles, indépendamment de l'appareil auquel il a accès.

Selon des caractéristiques particulières, le moyen d'agrégation est adapté à ce que la liste agrégée soit rangée par entité physique.

Selon des caractéristiques particulières, le moyen d'agrégation est adapté à ce que la liste agrégée soit rangée par type de média.

Selon des caractéristiques particulières, le moyen de recherche est adapté à ne pas prendre en compte les médias affectés d'une interdiction ou d'une limitation de diffusion.

Selon des caractéristiques particulières, le moyen d'agrégation est adapté à ce que la liste agrégée comporte, pour chaque média, un pointeur qui représente la localisation dudit média sur le réseau.

Selon des caractéristiques particulières, le moyen d'agrégation est adapté à ce que la liste agrégée comporte, pour chaque média, une interface susceptible de traiter ledit média.

Selon des caractéristiques particulières, le dispositif tel que succinctement exposé ci-dessus comporte un moyen de sélection d'un média représenté dans la liste agrégée.

Selon des caractéristiques particulières, le dispositif tel que succinctement exposé ci-dessus comporte un moyen de sélection de l'appareil pour la diffusion d'un média.

Selon des caractéristiques particulières, ledit moyen de sélection d'un média comporte une télécommande manuelle.

Selon des caractéristiques particulières, ladite télécommande manuelle comporte un émetteur de signaux lumineux et un émetteur de signaux radios.

Selon des caractéristiques particulières, la télécommande manuelle est adaptée à afficher des images en trois dimensions représentatives des appareils susceptibles de diffuser au moins un type de média.

Selon des caractéristiques particulières, la télécommande manuelle est adaptée à émettre une requête pour que chaque appareil à portée de la télécommande fournisse une réponse l'identifiant.

Selon des caractéristiques particulières, au moins un appareil est adapté à ce que la sélection d'un média met en oeuvre des touches de flèches et une touche de validation.

Selon des caractéristiques particulières, lorsque la sélection d'un média concerne un média pour lequel l'appareil donne l'accès le plus direct audit média sélectionné, le moyen de transmission est adapté à transmettre ledit média à l'appareil sélectionné pour diffuser ledit média.

Les avantages, buts et caractéristiques particulières du dispositif objet du deuxième aspect de la présente invention étant identiques à ceux du procédé objet du premier aspect de la présente invention, ils ne sont pas rappelés ici.

La présente invention concerne aussi un procédé et un dispositif de télécommande. Elle s'applique, en particulier à la télécommande de systèmes informatiques, multimédias, audiovisuels ou domotiques tels que des téléviseurs, des décodeurs, des chaînes audio, des ordinateurs, des systèmes de chauffage ou de climatisation, des volets ou des systèmes d'alarme.

On connaît, dans le domaine audiovisuel, des télécommandes munis d'un clavier, éventuellement d'un écran et d'un émetteur de signaux généralement infrarouges ou hertziens. Certains de ces télécommandes sont dites universelles parce qu'elles émettent des signaux normalisés qui peuvent être interprétés de la même manière par différents dispositifs électroniques à télécommander.

Cependant, ces télécommandes ne présentent aucune capacité d'adaptation à leur environnement, par exemple, à la personne qui les utilise, aux équipements susceptibles d'être télécommandés, aux médias disponibles, à leur position dans l'espace, à l'heure et à la disponibilité de fonctions d'équipements mettant en oeuvre un protocole de communication avec la télécommande.

Or les inventeurs ont découvert que le reconfiguration automatique d'une télécommande en fonction de son environnement pouvait permettre de nouveaux services ou fonctionnements. Par exemple :
- en fonction de la personne qui l'utilise, une télécommande peut restreindre les chaînes de télévision accessibles ou l'accès à des médias présents sur un réseau informatique et
- en fonction des équipements à portée de la télécommande, des médias différents ou des fonctionnalités différentes sont proposées à l'utilisateur.

Les troisième et quatrième aspects de la présente invention visent, en particulier, à simplifier l'utilisation d'une télécommande tout en permettant de commander un grand nombre d'équipements avec la même télécommande.

A cet effet, selon un troisième aspect, la présente invention vise un procédé de configuration d'une télécommande, caractérisé en ce qu'il comporte :
- une étape de détermination d'au moins un paramètre d'environnement de la télécommande et
- une étape d'autoconfiguration de la mise à disposition de fonctions et/ou de médias à l'utilisateur de la télécommande.

Grâce à ces dispositions, l'utilisateur dispose de la configuration de sa télécommande qui convient en fonction d'au moins un paramètre d'environnement de la télécommande. Par exemple le paramètre d'environnement concerne la personne qui utilise la télécommande, les équipements susceptibles d'être télécommandés, les médias disponibles, leur position dans l'espace, l'heure et la disponibilité de fonctions d'équipements mettant en oeuvre un protocole de communication avec la télécommande.

Selon des caractéristiques particulières, au cours de l'étape de détermination d'au moins un paramètre d'environnement de la télécommande, on détermine la personne qui utilise la télécommande.

Selon des caractéristiques particulières, au cours de l'étape de détermination d'au moins un paramètre d'environnement de la télécommande, on détermine les équipements susceptibles d'être télécommandés.

Selon des caractéristiques particulières, au cours de l'étape de détermination d'au moins un paramètre d'environnement de la télécommande, on détermine les médias disponibles.

Selon des caractéristiques particulières, au cours de l'étape de détermination d'au moins un paramètre d'environnement de la télécommande, on détermine la position dans l'espace des équipements susceptibles d'être télécommandés.

Selon des caractéristiques particulières, au cours de l'étape de détermination d'au moins un paramètre d'environnement de la télécommande, on détermine l'heure.

Selon des caractéristiques particulières, au cours de l'étape de détermination d'au moins un paramètre d'environnement de la télécommande, on détermine la disponibilité de fonctions d'équipements mettant en oeuvre un protocole de communication avec la télécommande.

Grâce à chacune de ces dispositions, la télécommande présente une ergonomie et/ou une protection de l'utilisateur qui sont optimisées.

Par exemple, en fonction de la personne qui l'utilise et/ou de l'heure, la télécommande restreint les chaînes de télévision accessibles ou l'accès à des médias présents sur un réseau informatique.

Par exemple, en fonction des équipements à portée de la télécommande, des médias différents ou des fonctionnalités différentes sont proposées à l'utilisateur.

Selon des caractéristiques particulières, au cours de l'étape d'autoconfiguration de la mise à disposition de fonctions ou de médias à l'utilisateur de la télécommande, on affiche et/ou on active les fonctions et/ou médias dont l'accès est autorisé et/ou disponible, en fonction de chaque paramètre d'environnement déterminé au cours de l'étape de détermination d'au moins un paramètre d'environnement de la télécommande.

Selon un quatrième aspect, la présente invention vise un dispositif de configuration d'une télécommande, caractérisé en ce qu'il comporte :
- un moyen de détermination d'au moins un paramètre d'environnement de la télécommande et
- un moyen d'autoconfiguration de la mise à disposition de fonctions et/ou de médias à l'utilisateur de la télécommande.

Les avantages, buts et caractéristiques particulières du dispositif objet du quatrième aspect de la présente invention étant similaires à ceux du procédé objet du troisième aspect de la présente invention, ils ne sont pas rappelés ici.

Les différents aspects de la présente invention sont destinés à se combiner, ainsi que leurs caractéristiques particulières qui sont succinctement exposées ci-dessus ou dans la description ci-après, afin de réaliser un procédé d'échange de données sous le contrôle d'une télécommande particulièrement puissant et adaptable aux différentes situations d'utilisation et d'utilisateurs.

D'autres avantages, buts et caractéristiques de la présente invention ressortiront de la description qui va suivre, faite, dans un but explicatif et nullement limitatif, en regard des dessins annexés dans lesquels :
- la figure 1 représente, de manière schématique, un mode de réalisation particulier du dispositif d'édition d'image et du dispositif de télécommande objets de la présente invention,
- les figures 2A et 2B représentent, schématiquement, une télécommande et son affichage préférentiellement mis en oeuvre en combinaison avec le dispositif illustré en figure 1, au cours de deux phases de fonctionnement de ce dispositif,
- la figure 3 représente, sous forme d'un logigramme, un mode de réalisation particulier du procédé d'édition d'image objet de la présente invention et
- les figures 4A et 4B représentent, sous forme d'un logigramme, un mode de réalisation particulier du procédé de télécommande objet de la présente invention.

Bien que les appareils décrits pour accéder à un réseau informatique, par exemple Internet, soient, dans la description, décrits comme des terminaux utilisateurs, particulièrement de type ordinateur individuel, tous les types d'appareils peuvent être mis en oeuvre, par exemple assistants numériques personnels (connus sous le nom de PDA pour personal digital assistant) et téléphones, en particulier mobiles.

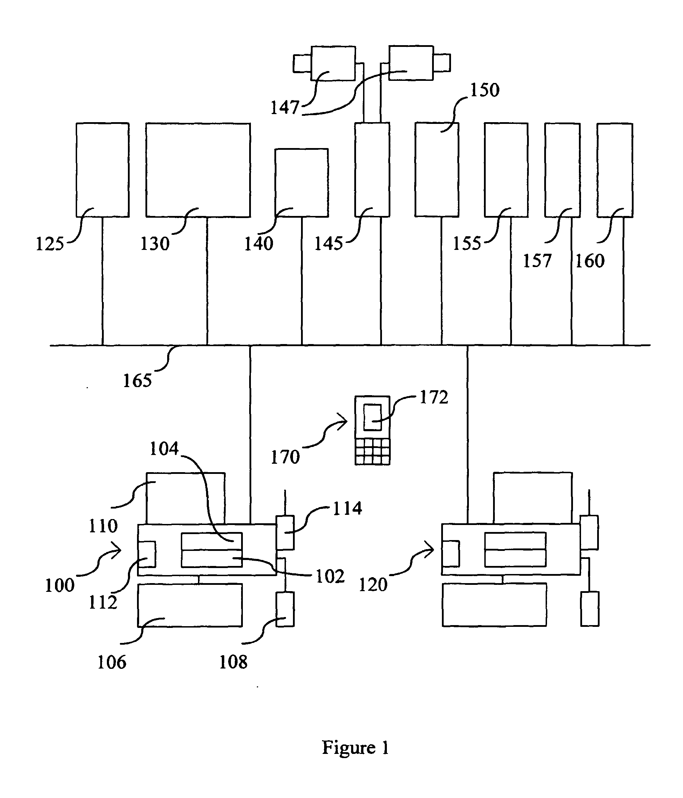

On observe, en figure 1, un réseau domestique comportant un terminal utilisateur 100, un terminal utilisateur 120, un serveur 125, téléviseur 130, un interphone 140, un système de surveillance 145 comportant des caméras de vidéo-surveillance 147, un système domotique 150, une chaîne musicale 155, un décodeur de signaux vidéos 157 et un lecteur de films 160. Tous ces appareils sont reliés entre eux par un réseau 165. Certains de ces appareils sont commandés par une télécommande 170.

Le terminal utilisateur 100, de type connu, par exemple sous la forme d'un ordinateur personnel (connu sous le nom de PC pour personal computer) comporte une unité centrale 102, une mémoire non volatile 104, un clavier 106, un dispositif de pointage 108, un écran de visualisation 110, un modem 112 et un périphérique de communication radio 114 pour la communication entre la télécommande 170 et le terminal 100. Le terminal utilisateur 100 est adapté à mettre en oeuvre un logiciel de navigation sur Internet et, préférentiellement en tâche de fond, un système d'exploitation et un logiciel mettant en oeuvre le procédé d'échange de données objet de la présente invention. Le système d'exploitation fournit des services génériques pouvant être utilisés par n'importe quel type d'application et le logiciel en fait une utilisation propre. Par exemple, le système d'exploitation fournit les services d'accès réseau, mais les données qui y transitent sont du ressort du logiciel (la couche applicative).

La mémoire non volatile 104 prend, par exemple, la forme d'un disque dur. Le clavier 106 est un clavier à touche ou un écran tactile, par exemple. Le dispositif de pointage 108 prend, par exemple la forme d'une souris, d'un trackball, d'un touchpad ou d'un écran tactile. Le modem 112 peut être adapté à un réseau téléphonique commuté, à un réseau large-bande, à un réseau câblé, à un réseau satellitaire ou à un réseau terrestre sans fil, par exemple.

Le périphérique de communication radio 114 pour la communication entre la télécommande 170 et le terminal 100 est de type connu et met en oeuvre, par exemple, une porteuse de 433 MHz et un port dit "USB" (acronyme de Universal Serial Bus, ou "Bus série universel" en français).

Le terminal utilisateur 120 est similaire au terminal utilisateur 100. Les composants, sous-systèmes et logiciels du terminal utilisateur 120 ne sont donc pas détaillés ici.

Le décodeur de signaux 157 est connu, aux Etats-Unis, sous le nom de "set-top box". Il décode des signaux de chaînes de télévision hertziennes ou par câble ou par satellite.

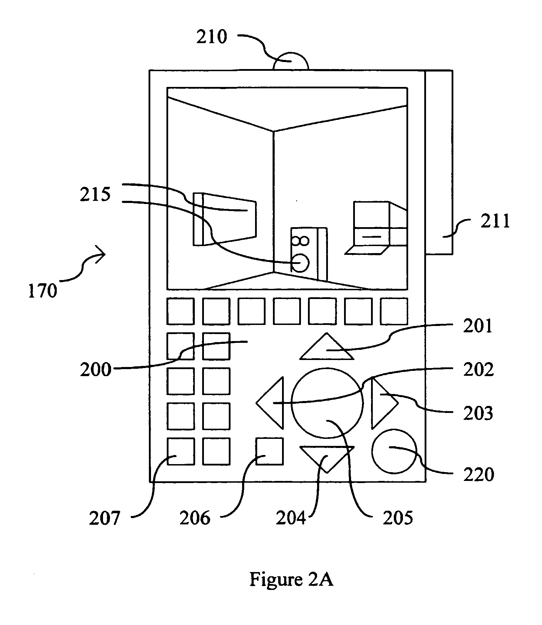

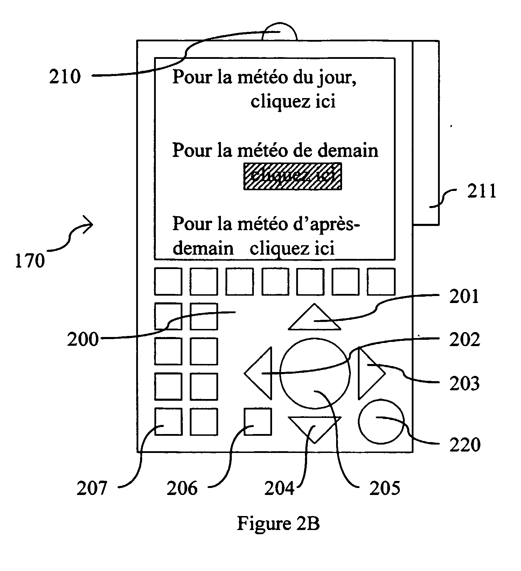

Le serveur 125, le téléviseur 130, la chaîne musicale 155, le décodeur de signaux vidéos 157 et le lecteur de films 160 disposent tous d'un logiciel mettant en oeuvre le procédé d'échange de données objet de la présente invention. La télécommande 170 est illustrée en figures 2A et 2B. La télécommande 170 met en oeuvre un logiciel d'affichage et de navigation particulier, si elle est dotée d'un afficheur, comme c'est le cas en figures 2A et 2B.

En variante (non représentée) l'interphone 140, le système de surveillance 145 comportant des caméras de vidéo-surveillance 147 et le système domotique 150 mettent aussi en oeuvre un logiciel implémentant le procédé d'échange de données objet de la présente invention.

Tous ces appareils, serveur 125, téléviseur 130, chaîne musicale 155, décodeur de signaux vidéos 157, lecteur de films 160 et télécommande 170, mettent en oeuvre, dans leur communication, le standard UPnP (pour universal plug and play que l'on peut traduire par utilisation immédiate dès de la connexion, universelle). On rappelle ici que ce standard permet une auto-configuration des appareils reliés en réseau sans étape d'installation complexe et permet à ces appareils de se reconnaître et de contrôler mutuellement par l'intermédiaire de descriptions de leurs fonctionnalités.

La chaîne musicale 155 est adaptée à lire des supports musicaux et à émettre des signaux sonores. Le lecteur de films 160 est de type camescope, magnétoscope ou lecteur de disques optiques.

On observe que l'ensemble des appareils illustrés en figure 1 ne sont pas indispensables à la mise en oeuvre de la présente invention mais que, préférentiellement, celle-ci met en oeuvre au moins le terminal 100 et le décodeur de signaux 157 relié au téléviseur 130, le terminal 100 et le décodeur de signaux 157 étant reliés entre eux par un câble électrique ou un support sans fil (non représenté), par exemple des boîtiers connus sous le nom commercial de "video sender" (marque déposée) ou "vidéo transmitter" (marque déposée) qui communiquent entre eux sur une porteuse à 2,4 GHz.

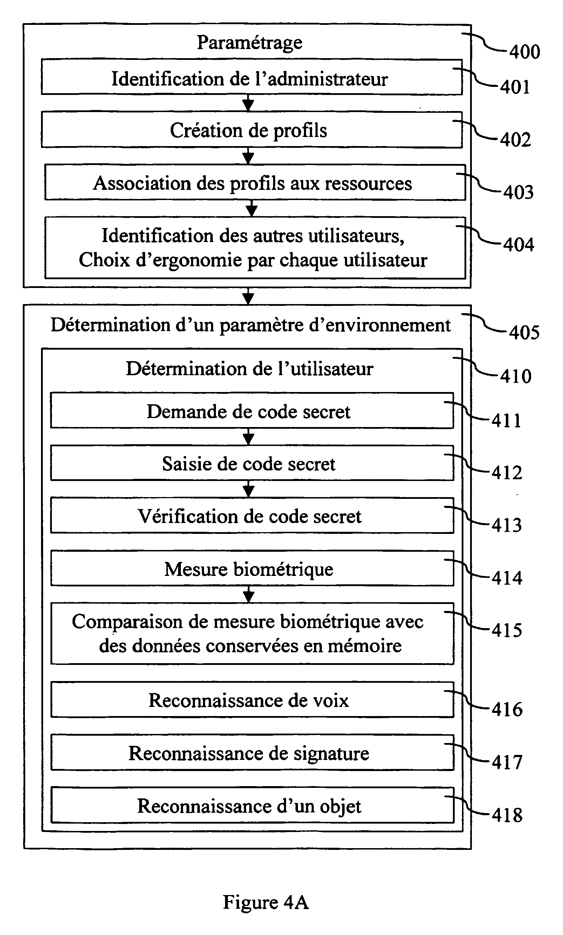

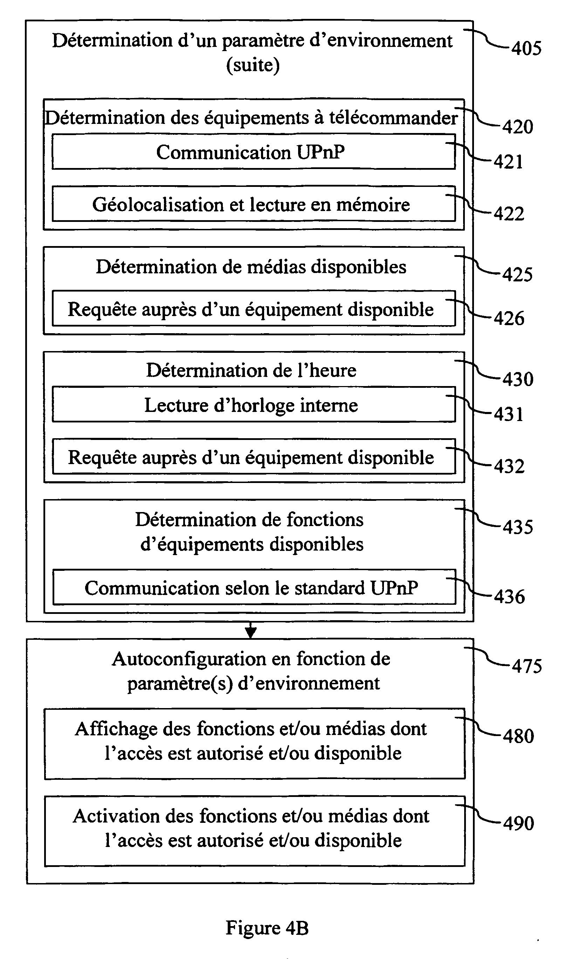

La télécommande 170 comporte une unité centrale 172 qui met, par exemple, en oeuvre un logiciel implémentant les étapes décrites en regard des figures 4A et 4B.

On observe, en figures 2A, que la télécommande 170 comporte un clavier 200 comportant des touches de flèche 201 à 204, une touche de validation 205, une touche de retour 206 et d'autres touches 207, un émetteur/récepteur de signaux visuels 210, par exemple de signaux infrarouge et un émetteur/récepteur de signaux radio 220. La télécommande 170 est adaptée à commander tout ou partie des appareils illustrés en figure 1 et, en particulier, le téléviseur 130 et le décodeurs de signaux 157 par l'intermédiaire de signaux infrarouges et le terminal 100, par l'intermédiaire de signaux radios.

Bien que la télécommande 170 soit décrite ici sous la forme d'une télécommande classique, elle peut, en variante, prendre la forme d'un assistant numérique personnel (connu sous le nom de "PDA" pour personal digital assistant) ou d'ordinateur de poche (connu sous le nom de "pocket PC") ou de téléphone mobile.

Ainsi, la télécommande communique à la fois sur un support radio, avec le terminal utilisateur 100 et sur un support Infrarouge, avec le téléviseur 130 ou avec le décodeur de signaux 157, de manière connue en soi.

Par la mise en oeuvre de la présente invention, l'utilisateur peut avoir, sur une entrée auxiliaire de son téléviseur, par exemple auxiliaire 1, une chaîne, une sortie du lecteur de films 160 et, sur une entrée auxiliaire, par exemple auxiliaire 2, l'accès à une liste agrégée de tous les médias disponibles et à accès autorisé, pour cet utilisateur, présent sur le réseau 165. Cet accès est aussi appelé, dans la description "media server" et comporte l'accès aux données à accès autorisé conservées par les appareils reliés au réseau et aux données autorisées accessibles par le réseau informatique, par exemple Internet, par l'intermédiaire du modem 112 du terminal utilisateur 100.

La télécommande 170 donne ainsi accès, avec une ergonomie simplifiés, choisir par chaque utilisateur, mettant en oeuvre les touches de flèche et de validation, par exemple à une bibliothèques d'image sur le disque dur du PC ou à de diaporamas (en anglais "slide show"), à des fichiers musicaux, à des films, comme à une chaîne de télévision.

On observe que la télécommande 170 commande aussi le son et les pause et reprise de diffusion d'un média.

Le logiciel mettant en oeuvre le procédé d'échange de données objet de la présente invention comporte trois modules (non représentés) :
- le module "media server" ou "serveur de médias", qui permet à plusieurs appareils d'afficher, chacun, une liste agrégée de médias disponibles sur le réseau et à accès autorisé,
- le module "renderer" ou "diffuseur" qui met en oeuvre les principaux pilotes et normes de compression et/ou de transmission de données des médias disponibles sur le réseau, par exemple MP3 et divix (marques déposées) et
- le module "point de contrôle" ou "control point" qui permet, soit en utilisant la télécommande 170, soit en utilisant les interfaces utilisateurs des appareils mis en oeuvre, de sélectionner un média, dans une liste agrégée et un appareil qui va diffuser ledit média, parmi les appareils reliés au réseau 165.

Après de simples opérations de prise et lâché (en anglais "drag' n drop") pour informer le media server des répertoires où il doit rechercher les médias dans les équipements et répertoires à accès autorisé pour l'utilisateur, le module media server implémenté sur le terminal 100 scrute (en anglais "parse") l'ensemble des médias, fichiers de données représentatives d'entités physiques, par exemple son et/ou image, autorisées et disponibles sur le terminal 100 et crée une liste ou une base de données virtuelle dans laquelle, les médias sont indexés automatiquement et organisés par entité physique, par exemple de la manière suivante :
- médias audiovisuels,
- médias d'images fixes,
- médias sonores et
- pages disponibles sur le réseau informatique, par exemple internet et sélectionnés comme favoris par l'utilisateur (en anglais "bookmark").

On observe que les droits d'accès (en anglais DRM pour Digital Rights Management) peuvent comporter des refus d'agrégation (par exemple pour tous les médias provenant du décodeur de signaux 157 ou par droits sur les fichiers conservés par le terminal 100) de médias, auquel cas le module media server ne tient pas compte des médias dont la diffusion n'est pas autorisée, dans la liste ou base de données transmise.

Puis, la liste des médias est transmise au décodeur de signaux 157, et aux autres appareils qui l'agrègent, selon une arborescence d'abord effectuée par entités physiques représentées par ces médias, puis média par média, avec la liste des autres médias disponibles sur le réseau 165 que ces appareils peuvent traiter, par exemple diffuser.

A cet effet, par exemple sur le décodeur de signaux 157, on prévoit un serveur portable indépendant du système d'exploitation du décodeur de signaux et qui gère la base de données virtuelle de la liste agrégée de médias disponibles.

On observe que, grâce à ces caractéristiques, chaque appareil relié au réseau dispose du repérage des médias disponibles et à accès autorisé, sans que ces médias n'aient été déplacés. Chaque appareil capable de diffuser un média, par exemple le décodeur de signaux 157 associe, ensuite, à chaque média de la liste agrégée, une application interface entre le format du média et le format du diffuseur auquel il est associé, ici le téléviseur. Par exemple, les interfaces suivantes sont associées aux médias : joueurs (en anglais "players") de MP3, Divix, Codec Microsoft (marque déposée), Codec mpeg 2 (marque déposée). Le décodeur de signaux 157 affiche ensuite le premier niveau de noeud de l'arborescence de la liste agrégé, sur le téléviseur 130.

Préférentiellement, les appareils effectuant l'agrégation des bases de données virtuelles ou listes n'agrègent que les médias qu'ils peuvent diffuser. Par exemple, un appareil photo n'agrège pas les fichiers textes. Ainsi, chaque appareil n'affiche qu'une liste agrégée des médias auquel il peut donner accès.

La télécommande 170, ou « module control point » permet de sélectionner, à distance, d'une part, un appareil de diffusion de l'information représentée par un média et, d'autre part, un média à diffuser par ledit appareil de diffusion. Selon les implémentations, l'interface utilisateur de cette télécommande 170 peut être un clavier, un dispositif de pointage, une télécommande, un écran tactile. Dans d'autres modes de réalisation des deux premiers aspects de la présente invention, sans interface utilisateur, ce module est commandé par une tâche de fond lançant automatiquement un média à une heure donnée, par exemple.

Pour sélectionner l'appareil de diffusion du média, la télécommande 170 émet d'abord une requête à tous les appareils susceptibles de communiquer avec elle, conformément au standard UPnP. En réponse, tous les appareils susceptibles de communiquer avec la télécommande 170 émettent une réponse qui les identifie, c'est-à-dire qui indique les fonctions de ces appareils.

A réception de ces réponses, la télécommande 170 affiche, dans une ergonomie particulière qui peut être sélectionnée par un ou plusieurs de ses utilisateurs, une forme en trois dimensions 215 représentative de chaque appareil ayant répondu, par exemple une image en trois dimensions d'un téléviseur à tube cathodique, une image en trois dimensions d'un téléviseur à écran plat, d'un ordinateur de bureau, d'un ordinateur portable, d'un décodeur de signaux, d'une lampe, de volets roulants, ... Comme on l'observe en figure 2A, ces images sont organisées dans une pièce virtuelle ressemblant à un intérieur de maison ou d'appartement.

Cette interface homme-machine s'adapte à son environnement soit par configuration par l'utilisateur soit automatiquement (voir étapes 405 et 475).

Pour adapter automatiquement la représentation des appareils ayant répondu, et susceptibles de communiquer avec la télécommande, ces appareils peuvent être géolocalisés, par exemple par utilisation de plusieurs émetteurs WIFI, infrarouges ou bluetooth (marque déposée) et triangulation après mesure de puissance reçue, de niveau de signal ou de consommation de CRC (codes de redondance).

De plus, cette interface homme-machine effectue une personnalisation automatique en fonction de la personne qui la met en oeuvre : une autoconfiguration a lieu en fonction de l'identification de l'utilisateur. Cette identification est, par exemple, donnée par code secret ou par l'usage d'un capteur de biométrie 220, ce qui permet d'affecter des interdictions d'accès à des ressources réservées pour certains utilisateurs potentiels (par exemple les enfants).

Si, avec la télécommande 170, l'utilisateur sélectionne les médias accessibles par internet, en utilisant la flèche droite du clavier de sa télécommande dans la liste des types d'entités physiques disponibles, il observe, soit sur l'appareil de diffusion, par exemple le téléviseur 130, soit sur l'écran de sa télécommande 170, si elle en dispose, une liste des pages de sites directement accessibles.

Par utilisation des flèches 201 à 204 du clavier de la télécommande, l'utilisateur choisit la page dans la liste de pages et valide son choix avec la touche de validation 205.

Une fois que l'utilisateur a sélectionné une adresse électronique dans la liste agrégée, on affiche la page correspondant à ladite adresse et l'application logicielle repère automatiquement tous les liens hypertextes disponibles sur la page ainsi que leur position dans la page (en abscisses et en ordonnées).

Par utilisation des flèches du clavier de la télécommande, l'utilisateur peut choisir et sélectionner un lien la page (voir figure 2B).

Ainsi, dans certains modes de réalisation du procédé d'échange de données objet de la présente invention, on fournit à l'utilisateur un navigateur internet embarqué pour des environnements qui n'en disposent pas. On utilise ici comme définition d'un "navigateur", une application qui se sert du réseau Internet et qui présente des données en provenant sous une forme graphique.

A cet effet, l'appareil qui a accès à Internet, ici le terminal 100, effectue le repérage de tous les liens présents sur la page et les classe dans une liste qu'il conserve. Par exemple, ce repérage est effectué par des fonctions de base du système d'exploitation ou du navigateur, que le logiciel appelle. D'autres techniques peuvent être mises en oeuvre, telle l'analyse du code source HTML pour détecter les balises signalant l'existence de liens dans la page.

Chaque lien est ensuite repéré par sa position physique dans la page affichée et les relations entre les positions physiques des liens sont mises en correspondance avec les flèches du clavier de la télécommande dans un tableau à deux dimensions dans lequel chaque case est occupée, au plus, par un lien.

Par exemple, en partant d'un premier lien, l'autre lien qui est à droite du premier lien dans un angle dans l'intervalle [+45°, -45°[ et le plus proche du premier lien est affecté à la case de droite du tableau, par rapport à la case correspondant au premier lien.

En partant du premier lien représenté dans une case donnée de ce tableau, lorsque l'utilisateur appuie sur la flèche droite du clavier de la télécommande, il provoque le surlignage du lien présent dans la case du tableau à droite de la case affectée au premier lien.

Le premier lien surligné est le premier lien de la liste lors du premier affichage de la page. Ainsi, le surlignage est effectué en partant du lien le plus en haut à gauche puis en suivant un algorithme de recherche du lien le plus "proche" en fonction de la touche de navigation ou flèche 201 à 204 pressée.

Une fois le lien qui l'intéresse surligné, l'utilisateur appuie sur la touche de validation 205 pour sélectionner le lien, comme s'il avait cliqué dessus avec le dispositif de pointage 108.

Pour sortir de la page, l'utilisateur appuie sur la touche de retour 206 de sa télécommande 170.

Le module « Renderer », qui diffuse le contenu du média sur un appareil ou équipement choisi par l'utilisateur, utilise les principes des échanges entre pairs, en anglais "peer-to-peer" pour échange des fichiers médias. On rappelle que, dans les architectures classiques, c'est un serveur qui gère les échanges entre deux clients pour toute la durée de la communication. Dans le principe "peer-to-peer", chacune des extrémités connaît l'autre, soit par requête préalable sur un serveur, qui n'a que cet usage au début de la session, soit parce que les utilisateurs se sont mis d'accord. Chacune des deux machines est client et serveur et elles n'ont besoin d'aucune aide extérieure pour communiquer.

Une fois sélectionnées par entité physique et par type de média, l'utilisateur se voit présenter des listes de médias rangées par centres d'intérêt ou par genre. On observe que, parmi les propriétés des fichiers, on trouve des descriptifs, connus sous le nom anglais de "tag" pour "étiquette". Ces tags représentent, par exemple, le genre d'un morceau de musique, par exemple jazz, rock, classique, ... L'utilisateur peut éditer certains de ces descriptifs pour indiquer ses centres d'intérêts.

De même, le classement peut être effectué par date, par artiste, par ordre alphabétique ... On observe que le classement peut mettre en oeuvre le résultat de systèmes d'analyse automatique d'ensembles de fichiers, par exemples musicaux, afin d'attribuer à chaque fichier un genre, par exemple en fonction de rythmes, instruments, ...

Le classement peut aussi mettre en oeuvre des données d'utilisation des médias, par exemple en mettant en avant les médias les plus utilisés ou les plus récemment utilisés par l'utilisateur de la télécommande.

On observe qu'en absence de donnée descriptive, le nom du fichier est utilisé.

En cas de doublon (deux médias possédant les mêmes données descriptives), on peut, par exemple, laisser le doublon dans la liste agrégée ou donner priorité au média local et éliminer chaque doublon à distance.

Sur des matériels appropriés, le logiciel peut gérer plusieurs flux en entrée et en sortie, plusieurs appareils d'entrée (sources) et de sortie (diffuseurs) et mémoriser les contenus dans des disques durs locaux ou distants.

Les sources médias sélectionnées sont référencées et indexées dans une base de données de médias. Ce contenu et l'information relative sont rendues disponibles pour le monde extérieur à chaque appareil du réseau par l'intermédiaire de requêtes UPnP. Toute application compatible UPnP peut se connecter au module media server et requérir tout contenu de ce module media server.

Le module media serveur fournit un gestionnaire de bases de données par défaut, même s'il peut mettre en oeuvre d'autres gestionnaires de bases de données pré-existants.

Le module média renderer fait interface entre les fichiers des médias et l'appareil de diffusion final.

On observe qu'un système d'exploitation léger suffit pour mettre en oeuvre le procédé d'échange de données objet de la présente invention, en particulier sur les appareils qui ne sont pas des ordinateurs, par exemple le décodeur de signaux 157.

Dans une variante, la télécommande comporte un moyen de détection d'orientation. Par exemple, ce moyen de détection d'orientation comporte au moins un gyroscope, les déplacements relatifs du boîtier de la télécommande par rapport à chaque gyroscope, dont l'orientation dans l'espace est sensiblement constante, étant mesurés et pris en compte pour réaliser un moyen de pointage dont les fonctions sont similaires à celle d'une souris, par exemple.

Si, comme illustré en figures 2A et 2B, l'interface utilisateur graphique (en anglais GUI pour graphical user interface) se trouve sur la télécommande, les signaux d'orientation provenant de chaque gyroscope sont mis en oeuvre par les circuits de la télécommande pour déplacer un curseur dans cette interface. Si, en variante, l'interface utilisateur graphique se trouve sur un écran externe à la télécommande, par exemple un écran de télévision ou d'ordinateur, les signaux de position de curseur sont transmis à distance, préférentiellement, sous forme de signaux hertziens au périphérique de communication radio 114 (voir figure 1). La télécommande comporte aussi au moins une touche dont les fonctions sont similaires à celles d'un bouton de souris. On comprend qu'une telle télécommande permet de lancer, stopper, pauser la lecture des médias et d'effectuer d'autres fonctions, par l'intermédiaires de menus ou d'icônes, par exemple.

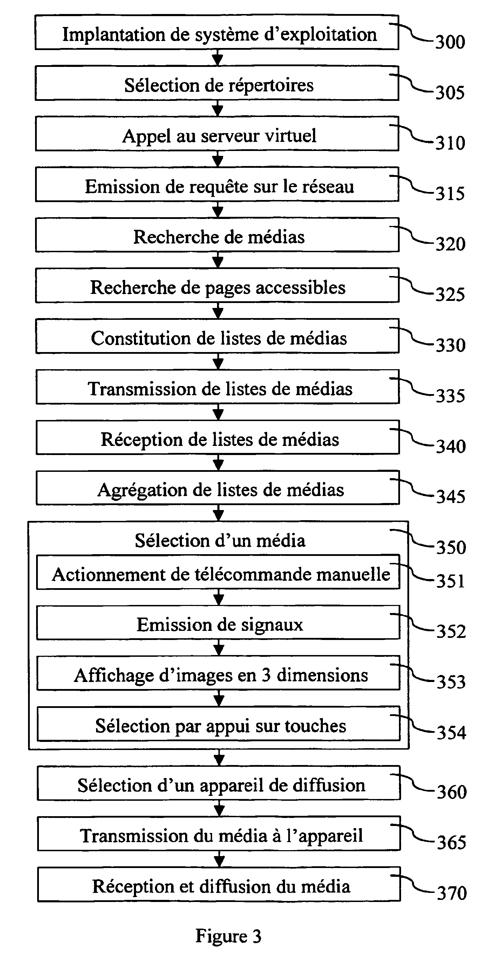

On observe, en figure 3, une étape 300 d'implantation du système d'exploitation léger sur différents appareils susceptibles de mettre en oeuvre le procédé d'échange de données objet de la présente invention.

Le système d'exploitation qui est installé sur chaque appareil est architecturé en couches selon une architecture abstraite. Dans cette architecture, les applications sont toujours des "control points" au sens large. Qu'il s'agisse de médias ou de domotique, les applications sont les éléments logiciels qui vont faire usage des services disponibles sur le réseau, soit de manière basique (commande directe par l'utilisateur) soit de manière évoluée (réactions programmées à des événements, actions préprogrammées, etc) avec ou sans interface utilisateur comme déjà présenté plus haut.

La plate-forme comporte des sous-systèmes compatibles JAVA (marque déposée) constituant une machine virtuelle légère, rapide, adaptée à répondre aux besoins des marchés de logiciels embarqués. La machine virtuelle est compatible Java au niveau du bytecode et des formats de fichier. En revanche, toutes les classes de base Java ne sont pas disponibles.

Pour la mise en oeuvre sur un réseau déjà installé comportant un terminal et un assistant numérique personnel, les éléments additionnels comportent des logiciels pour terminaux informatiques (media server, media renderer et support du standard UPnP) des logiciels pour assistants personnels (machine virtuelle Java, compilée pour s'exécuter dans l'environnement cible, support du standard UPnP et l'application elle-même, code Java destiné à s'exécuter sur cette machine virtuelle.

Les logiciels ont été conçus pour être indépendants des plate-formes pré-existantes et font un usage extensif des couches abstraites et des environnements d'exécution virtuels. Dans le domaine des systèmes d'exploitation, il existe des standards d'interface de programmation (API) qui permettent à un logiciel respectant les spécifications de ces standards d'être exécuté sur n'importe lequel de ces systèmes. La norme POSIX (marque déposée acronyme de Portable Operating System Interface for Unix ou "Interface portable de système d'exploitation pour Unix"), par exemple, est implémentée par certains Unix (marque déposée), Linux (marque déposée), partiellement par Windows (marque déposée) et OS/2 (marque déposée); ainsi, en prévoyant les codes pour l'utilisation de ces standards, on les rend compatibles de fait avec les plate-formes existantes respectant ledit standard.

Le système d'exploitation mis en oeuvre est, par exemple, compatible POSIX. Cet environnement hautement compatible peut être remplacé par un système d'exploitation d'ordinateur de bureau (Windows ou Linux, marques déposées).

Par exemple, sur le décodeur de signaux 157, on prévoit un serveur portable indépendant du système d'exploitation du décodeur de signaux et qui gère la base de données virtuelle de la liste agrégée de médias disponibles.

Au cours d'une étape 305, l'utilisateur effectue une sélection de répertoires dans chaque appareil ou par défaut, tous les répertoires sont sélectionnés. Pour effectuer cette sélection, l'utilisateur effectue de simples opérations de prise et lâché (en anglais "drag' n drop") pour informer le media server des répertoires où il doit rechercher les médias.

Au cours d'une étape 310, on fait appel au serveur virtuel depuis le control point, par requête à un des appareils en question.

Au cours d'une étape 315, l'appareil en question émet une requête, sur le réseau local, auprès des autres appareils susceptibles de mettre en oeuvre le procédé d'échange de données objet de la présente invention et reçoit, en retour, des informations sur les types de médias que les autres appareils sont capables de traiter, par exemple en mettant en oeuvre la standard UPnP.

Au cours d'une étape 320, chaque appareil qui reçoit la requête effectue une recherche d'au moins un type de médias représentatifs d'au moins une entité physique, directement accessibles par ledit appareil.

Au cours de cette recherche, l'appareil effectue un tri en fonction des droits d'accès à distance associés à chaque média. Les droits d'accès (en anglais DRM pour Digital Rights Management) peuvent comporter des refus d'agrégation de médias (par exemple pour tous les médias provenant du décodeur de signaux 157 ou par droits sur les fichiers conservés par le terminal 100), auquel cas le module media serveur ne tient pas compte des médias dont la diffusion n'est pas autorisée.

Pendant cette étape de recherche, le module media serveur scrute (en anglais "parse") l'ensemble des médias, fichiers de données représentatives d'entités physiques, par exemple son et/ou image, disponibles dans les répertoires sélectionnés de l'appareil.

Préférentiellement, pour au moins un média mettant en oeuvre des liens hypertextes, au cours de l'étape de recherche, on recherche des pages accessibles par l'appareil effectuant la recherche, étape 325, et, au cours de l'étape de transmission, on transmet une liste représentative de ces pages.

En variante, pour au moins un média mettant en oeuvre des liens hypertextes, au cours de l'étape de recherche, on recherche des liens accessibles sur une page accessible par ces liens.

Au cours d'une étape 330, chaque appareil constitue une liste ou une base de données indexant chaque média disponible. Dans cette liste ou une base de données virtuelle, les médias sont indexés automatiquement et organisés par entité physique, par exemple de la manière suivante :
- médias audiovisuels,
- médias d'images fixes,
- médias sonores et
- pages disponibles sur le réseau informatique, par exemple internet et sélectionnés comme favoris par l'utilisateur (en anglais "bookmark").

Les sources médias sélectionnées sont référencées et indexées dans une base de données de médias. Ce contenu et l'information relative sont rendues disponibles pour le monde extérieur à chaque appareil du réseau par l'intermédiaire de requêtes UPnP. Toute application compatible UPnP peut se connecter au média server et requérir tout contenu de ce média server.

Le média serveur fournit un gestionnaire de bases de données par défaut, même s'il peut mettre en oeuvre d'autres gestionnaires de bases de données pré-existants.

Au cours d'une étape 335, pour chaque type de média de la liste ainsi constituée, chaque appareil transmet aux autres appareils susceptibles de traiter ledit type de média, une liste représentative de médias trouvés sur ledit appareil au cours de l'étape de recherche. Dans ce cas, les médias sont triés par l'appareil qui effectue la transmission de la liste.

Au cours d'une étape 340, chaque appareil reçoit les listes provenant des autres appareils mettant en oeuvre le procédé d'échange de données objet de la présente invention.

Au cours d'une étape 345, chaque appareil effectue une étape d'agrégation, des listes de médias trouvés et/ou reçues indépendamment de appareil où se trouvent lesdits médias, cette liste agrégée étant organisée en arborescence comme suit :
- d'abord par entités physiques représentées par lesdits médias ;
- ensuite par type de média ;
- puis par centre d'intérêt, par genre, par date, par artiste, par ordre alphabétique, par média les plus souvent sélectionnés ou par médias les plus récemment sélectionnés, ...

Dans la liste agrégée, pour chaque média, un pointeur représente la localisation dudit média sur le réseau et à chaque média est associé une interface susceptible de traiter ledit média. Par exemple, le décodeur de signaux 157 associe, ensuite, à chaque média de la liste agrégée, une application interface entre le format du média et le format du diffuseur auquel il est associé, ici le téléviseur. Par exemple, les interfaces suivantes sont associées aux médias : joueurs (en anglais "players") de MP3, Divix, Codec Microsoft, Codec mpeg 2 (marques déposées). Le décodeur de signaux 157 affiche ensuite le premier niveau de noeud de l'arborescence de la liste agrégé, sur le téléviseur 130.

Dans le cadre de l'agrégation de listes de médias, les applications ont pour responsabilité de présenter à l'utilisateur sous une forme unifiée des services qui sont en réalité délocalisés et physiquement distincts.

On observe que, grâce à ces caractéristiques, chaque appareil dispose du repérage des médias disponibles et à accès autorisé, sans que ces médias n'aient été déplacés.

En variante, les appareils effectuant l'agrégation des bases de données virtuelles ou listes n'agrègent que les médias qu'ils peuvent diffuser. Par exemple, un appareil photo n'agrège pas les fichiers textes. Ainsi, chaque média n'affiche qu'une liste agrégée des médias auquel il peut donner accès. Dans ce cas, c'est l'appareil qui reçoit une liste qui effectue le tri des médias qu'il peut traiter.

Au cours d'une étape 350, l'utilisateur sélectionne, pour au moins un appareil de diffusion d'un média, un média représenté dans la liste agrégée, en mettant en oeuvre le control point.

On observe que, les sources médias étant référencées et indexées dans une base de données de médias, ce contenu et l'information relative sont rendues disponibles pour le monde extérieur à chaque appareil du réseau par l'intermédiaire de requêtes UPnP. Toute application compatible UPnP peut se connecter au media server et requérir tout contenu de ce media server.

Par exemple, au cours de l'étape 350 de sélection d'un média, l'utilisateur effectue la sélection en actionnant une télécommande manuelle, étape 351.

Par exemple, la télécommande manuelle émet des signaux lumineux et des signaux radio, étape 352, afin de commander des appareils possédant des récepteurs appropriés pour ces deux types de signaux, par exemple infrarouge pour un téléviseur sur lequel on veut diffuser le média et radio pour un ordinateur qui fournit le média.

Par exemple, au cours de l'étape 352, la télécommande émet une requête pour que chaque appareil à portée de la télécommande fournisse une réponse l'identifiant.

Puis, la télécommande manuelle affiche, sur la télécommande, des images en trois dimensions représentatives des appareils ayant répondu, étape 353.

Pour sélectionner un média dans la liste agrégée, l'utilisateur met en oeuvre des touches de flèches et une touche de validation de la télécommande, étape 354.

Pour sélectionner l'appareil de diffusion du média, la télécommande 170 émet d'abord une requête à tous les appareils susceptibles de communiquer avec elle, conformément au standard UPnP. En réponse, tous les appareils susceptibles de communiquer avec la télécommande 170 émettent une réponse qui les identifie, c'est-à-dire qui indique les fonctions de ces appareils.

A réception de ces réponses, la télécommande 170 affiche une forme en trois dimensions représentative de chaque appareil ayant répondu, par exemple une image en trois dimensions d'un téléviseur à tube cathodique, une image en trois dimensions d'un téléviseur à écran plat, d'un ordinateur de bureau, d'un ordinateur portable, d'un décodeur de signaux, d'une lampe, de volets roulants, ... Comme on l'observe en figure 2A, ces images sont organisées dans une pièce virtuelle ressemblant à un intérieur de maison ou d'appartement.

Cette interface homme-machine s'adapte à son environnement soit par configuration par l'utilisateur soit automatiquement.

De plus, cette interface homme-machine effectue une personnalisation automatique en fonction de la personne qui la met en oeuvre : une autoconfiguration a lieu en fonction de l'identification de l'utilisateur. Cette identification est, par exemple, donnée par code secret ou par l'usage d'un capteur de biométrie, ce qui permet d'affecter des interdictions d'accès à des ressources réservées pour certains utilisateurs potentiels (par exemple les enfants).

Si, avec la télécommande 170, l'utilisateur sélectionne les médias accessibles par internet, en utilisant la flèche droite du clavier de sa télécommande dans la liste des types d'entités physiques disponibles, il observe, soit sur l'appareil de diffusion, par exemple le téléviseur 130, soit sur l'écran de sa télécommande 170, si elle en dispose, une liste des pages de sites directement accessibles.

Par utilisation des flèches du clavier de la télécommande, l'utilisateur choisit la page dans la liste de pages et valide son choix avec la touche de validation.

Une fois que l'utilisateur a sélectionné une adresse électronique dans la liste agrégée, on affiche la page correspondant à ladite adresse et l'application logicielle repère automatiquement tous les liens hypertextes disponibles sur la page ainsi que leur position dans la page (en abscisses et en ordonnées).

Par utilisation des flèches du clavier de la télécommande, l'utilisateur peut choisir et sélectionner un lien la page.

Ainsi, dans certains modes de réalisation de la présente invention, on fournit à l'utilisateur un navigateur internet embarqué pour des environnement qui n'en disposent pas. On utilise ici comme définition d'un "navigateur", une application qui se sert du réseau Internet et qui présente des données en provenant sous une forme graphique, comme décrit plus haut.

Au cours d'une étape 360, l'utilisateur sélectionne un appareil de diffusion d'un média.

Au cours d'une étape 365, l'appareil qui donne l'accès le plus direct ou le plus rapide au média sélectionné transmet ledit média à l'appareil sélectionné pour diffuser ledit média.

Au cours d'une étape 370, l'appareil sélectionné pour diffuser le média sélectionné reçoit ledit média et le diffuse.

Le média renderer fait interface entre les fichiers des médias et l'appareil de diffusion final.

Le module Renderer utilise les principes des échanges entre pairs, en anglais "peer-to-peer" pour échange des fichiers médias. On rappelle que, dans les architectures classiques, c'est un serveur qui gère les échanges entre deux clients pour toute la durée de la communication. Dans le principe "peer-to-peer", chacune des extrémités connaît l'autre, soit par requête préalable sur un serveur, qui n'a que cet usage au début de la session, soit parce que les utilisateurs se sont mis d'accord. Chacune des deux machines est client et serveur et elles n'ont besoin d'aucune aide extérieure pour communiquer.

On observe que :
- le module "media server" ou "serveur de médias", qui permet à plusieurs appareils d'afficher, chacun, une liste agrégée de médias disponibles sur le réseau et à accès autorisé, effectue les étapes 315 à 345,
- le module "renderer" ou "diffuseur" qui met en oeuvre les principaux pilotes et normes de compression et/ou de transmission de données des médias disponibles sur le réseau, par exemple MP3 et divix est mis en oeuvre au cours de l'étape 370 et
- le module "point de contrôle" ou "control point" qui permet, soit en utilisant la télécommande, soit en utilisant les interfaces utilisateurs des appareils mis en oeuvre, de sélectionner un média, dans une liste agrégée et un appareil pour diffuser ledit média, parmi les appareils reliés au réseau, effectue les étapes 310 et 350 à 360.

Le module control point permet ainsi de sélectionner, à distance, d'une part un appareil de diffusion de l'information représentée par un média et, d'autre part, un média à diffuser par ledit appareil de diffusion. Selon les implémentations, l'interface utilisateur de ce module, s'il en dispose peut être un clavier, un dispositif de pointage, une télécommande. Dans d'autres modes de réalisation, sans interface utilisateur, ce module est commandé par une tâche de fond lançant automatiquement un média à une heure donnée, par exemple.

On observe, en figures 4A et 4B, différentes étapes d'un mode particulier de réalisation du procédé de télécommande objet du troisième aspect de la présente invention, comportant essentiellement :
- une étape 400 de paramétrage du fonctionnement de la télécommande,
- une étape 405 de détermination d'au moins un paramètre d'environnement de la télécommande 170 et
- une étape 475 d'autoconfiguration de la mise à disposition de fonctions ou de médias à l'utilisateur de la télécommande.

Au cours de l'étape 400 de paramétrage, un utilisateur considéré comme administrateur fournit des données d'identification, par exemple il choisit un mot de passe ou fournit des données biométriques permettant son identification, données qui seront ensuite nécessaires pour atteindre les fonctions d'administration, étape 401. L'administrateur crée ensuite des profils des autres utilisateurs, étape 402, et associe chaque utilisateur, dont lui-même, à des ressources (fonctions et médias) accessibles sur le réseau domestique illustré en figure 1, par exemple à des chaînes de télévision, à des terminaux ou à des répertoires de données personnelles disponibles dans les ordinateurs du réseau, étape 403.

On observe que chaque profil comporte des paramètres d'environnement de la télécommande qui permettront l'accès à des fonctions ou à des médias. Par exemple, l'administrateur décide que pour un utilisateur, aucun média ne sera accessible après 23 heures et que cet utilisateur ne pourra accéder qu'aux chaînes de télévision et radio et aux médias disponibles sur un terminal identifié. Pour un autre utilisateur, l'administrateur peut lui donner des droits d'administrateur identiques aux siens.

Au cours d'une étape 404, chacun des utilisateurs fournit des données d'identification (mot de passe ou données biométriques, par exemple) qui permettront de l'identifier à chaque fois qu'il utilisera la télécommande 170 et une ergonomie de présentation des informations par la télécommande. Cette ergonomie concerne, par exemple, la définition d'affichage, la ou les polices de caractères utilisés, la disposition des informations affichées, une hiérarchie de critères d'affichage (par exemple par nom d'auteur, par titre, par date de dernier accès, par fréquence des accès, par équipement et répertoire accessibles sur le réseau domestique).

Au cours de l'étape 405 de détermination d'au moins un paramètre d'environnement de la télécommande, on détermine la personne qui utilise la télécommande, étape 410. La détermination de la personne utilisant la télécommande peut être effectuée par affichage, sur la télécommande ou sur un écran, de terminal informatique ou sur un écran de télévision, d'une demande de code secret (ou mot de passe), étape 411, saisie, sur le clavier de la télécommande du code secret, étape 412, et vérification du code secret, par comparaison avec un code secret mémorisé dans la télécommande au cours de l'installation ou par reprogrammation, étape 413.

La détermination de la personne utilisant la télécommande peut aussi être effectuée par mesure biométrique, étape 414 et comparaison avec des données biométriques conservée en mémoire de la télécommande, étape 415. La mesure biométrique est préférentiellement effectuée sur la main, par exemple un doigt, de l'utilisateur.

La détermination de la personne utilisant la télécommande peut aussi être effectuée par reconnaissance de la voix de l'utilisateur, étape 416, la télécommande étant alors munie d'un microphone (non représenté).

La détermination de la personne utilisant la télécommande peut aussi être effectuée par reconnaissance d'une signature manuelle, étape 417, par exemple un mouvement, la télécommande étant alors munie d'un moyen de détermination de mouvement, par exemple, un gyroscope (non représenté)

La détermination de la personne utilisant la télécommande peut aussi être effectuée par reconnaissance d'un objet, étape 418, par exemple une carte à mémoire ou une clé enfichable, par exemple sur un port USB, dans la télécommande, ou par communication, à courte distance, avec un émetteur portable, par exemple un téléphone mettant en oeuvre le standard Bluetooth ou le standard Wifi ou une étiquette électronique, par exemple mettant en oeuvre le standard RFID (acronyme de radiofrequence identification pour identification radiofréquence).

Au cours de l'étape 405 de détermination d'au moins un paramètre d'environnement de la télécommande, on détermine les équipements susceptibles d'être télécommandés par la télécommande, étape 420. La détermination de ces équipements peut être effectuée en mettant en oeuvre une communication selon le standard UpnP (acronyme de Universal Plug and Play pour connexion et fonctionnement universel), étape 421.

La détermination de ces équipements peut être effectuée en mettant en oeuvre une localisation dans l'espace, aussi appelée géolocalisation, étape 422, par exemple par traitement de signaux reçus de la part de bornes émettrices disposées dans le bâtiment où se trouve la télécommande ou par traitement de signaux provenant de satellites et/ou d'émetteurs terrestres, par exemple par des traitements de géolocalisation connus sous le nom de differential global positioning system pour système de positionnement global différentiel. Une fois la localisation de la télécommande déterminée, on recherche, en mémoire, les équipements se trouvant à portée de la télécommande.

Au cours de l'étape 405 de détermination d'au moins un paramètre d'environnement de la télécommande, on détermine les médias susceptibles d'être télécommandés par la télécommande, étape 425. La détermination de ces médias peut être effectuée par requête auprès de l'un des équipements communiquant avec la télécommande, étape 426, ledit équipement effectuant une recherche des médias auxquels il permet un accès direct et des médias disponibles par l'intermédiaire d'autres équipements ne communiquant pas directement avec la télécommande. Une liste de ces médias, organisée par exemple par type de média est alors affichée soit sur un écran de la télécommande, soit sur un écran d'un équipement du réseau, par exemple un écran de terminal informatique ou un téléviseur, la télécommande permettant de naviguer dans cette liste organisée, par exemple par l'utilisation de boutons de flèche, de retour et de validation.

Au cours de l'étape 405 de détermination d'au moins un paramètre d'environnement de la télécommande, on détermine l'heure, étape 430. La détermination de l'heure peut être effectuée par référence à une horloge interne à la télécommande, étape 431, ou par requête auprès de l'un des équipements communiquant avec la télécommande, étape 432.

Au cours de l'étape 405 de détermination d'au moins un paramètre d'environnement de la télécommande, on détermine les fonctions disponibles des équipements susceptibles d'être télécommandés par la télécommande, étape 435. La détermination de ces fonctions peut être effectuée en mettant en oeuvre une communication selon le standard UpnP, étape 436.

Au cours de l'étape 475 d'autoconfiguration de la mise à disposition de fonctions ou de médias à l'utilisateur de la télécommande 170, on affiche, étape 480 et/ou on active, étape 490, les fonctions et/ou médias dont l'accès est autorisé et/ou disponible, en fonction de chaque paramètre d'environnement déterminé au cours de l'étape 405.

Ainsi, selon la personne qui utilise la télécommande, son profil, les équipements susceptibles d'être télécommandés, les médias disponibles, la position dans l'espace des équipements susceptibles d'être télécommandés, l'heure, la disponibilité de fonctions d'équipements communicant avec la télécommande, on affiche et on rend accessible à l'utilisateur :
- des médias et/ou
- des fonctions d'équipements disponibles sur le réseau domestique et susceptibles d'être télécommandés par la télécommande 170.

L'affichage lui-même peut être personnalisé en fonction des paramètres d'environnement indiqués ci-dessus, par exemple en fonction de la personne qui utilise la télécommande et de préférences qu'il a indiqué au cours d'une étape de paramétrage.

Par exemple, le classement des médias autorisés et disponibles peut mettre en oeuvre des données d'utilisation des médias par l'utilisateur identifié, par exemple en mettant en avant les médias les plus utilisés par cet utilisateur ou les plus récemment utilisés par cet utilisateur de la télécommande.

On comprend que, grâce à la mise en oeuvre du procédé de télécommande objet de la présente invention, l'utilisation de la télécommande 170 présente une ergonomie et/ou une protection de l'utilisateur qui sont optimisées.

Par exemple, en fonction de la personne qui l'utilise et/ou de l'heure, la télécommande restreint les chaînes de télévision accessibles ou l'accès à des médias présents sur un réseau informatique.

Selon un autre exemple, en fonction des équipements à portée de la télécommande, des médias différents ou des fonctionnalités différentes sont proposées à l'utilisateur.

L'utilisateur dispose donc d'une configuration de la télécommande qui lui convient en fonction d'au moins un paramètre d'environnement de la télécommande.

## Revendications

1. Procédé d'échange de données entre des appareils reliés à un réseau, comportant :
- une étape de recherche (320), par chacun d'au moins deux appareils, d'au moins un type de médias représentatifs d'au moins une entité physique, directement accessibles par ledit appareil et
- une étape de transmission (335), par chaque appareil ayant effectué ladite étape de recherche à au moins un autre appareil susceptible de traiter ledit type de média, d'une liste représentative de médias trouvés sur ledit appareil au cours de l'étape de recherche ; **caractérisé en ce qu'**il comporte, en outre : *
- une étape d'agrégation (345), par chaque appareil ayant effectué ladite recherche, des listes de médias trouvés et/ou reçues indépendamment de l'appareil où se trouvent lesdits médias.

2. Procédé selon la revendication 1, **caractérisé en ce qu'**au cours de l'étape d'agrégation (345), les listes agrégées sont rangées par entité physique.

3. Procédé selon l'une quelconque des revendications 1 ou 2, **caractérisé en ce que**, au cours de l'étape d'agrégation (345), les listes agrégées sont rangées par type de média.

4. Procédé selon l'une quelconque des revendications 1 à 3, **caractérisé en ce que**, au cours de l'étape de recherche (320), les médias affectés d'une interdiction ou d'une limitation de diffusion, ne sont pas pris en compte.

5. Procédé selon l'une quelconque des revendications 1 à 4, **caractérisé en ce que**, au cours de l'étape d'agrégation (345), la liste agrégée comporte, pour chaque média, un pointeur qui représente la localisation dudit média sur le réseau.

6. Procédé selon l'une quelconque des revendications 1 à 5, **caractérisé en ce que**, au cours de l'étape d'agrégation (345), la liste agrégée comporte, pour chaque média, une interface susceptible de traiter ledit média.

7. Procédé selon l'une quelconque des revendications 1 à 6, **caractérisé en ce qu'**il comporte une étape de sélection (360) d'un appareil de diffusion d'un média.

8. Procédé selon l'une quelconque des revendications 1 à 7, **caractérisé en ce qu'**il comporte une étape de sélection (350), pour au moins un appareil de diffusion d'un média, d'un média représenté dans la liste agrégée.

9. Procédé selon la revendication 8, **caractérisé en ce que** ladite étape de sélection d'un média (350) comporte une étape de sélection (351) par une télécommande manuelle (170).

10. Procédé selon la revendication 9, **caractérisé en ce que**, au cours de l'étape de sélection par une télécommande manuelle (351), on fait émettre des signaux lumineux et des signaux radio à ladite télécommande.

11. Procédé selon l'une quelconque des revendications 9 ou 10, **caractérisé en ce que**, au cours de l'étape de sélection par une télécommande manuelle (351), on affiche, sur ladite télécommande, des images en trois dimensions représentatives des appareils susceptibles de diffuser au moins un type de média.

12. Procédé selon l'une quelconque des revendications 9 à 11, **caractérisé en ce que**, au cours de l'étape de sélection par une télécommande manuelle (351), on émet une requête pour que chaque appareil à portée de la télécommande fournisse une réponse l'identifiant.

13. Procédé selon l'une quelconque des revendications 9 à 12, **caractérisé en ce que**, au cours de l'étape de sélection par une télécommande manuelle (351), on met en oeuvre des touches de flèches et une touche de validation.

14. Procédé selon l'une quelconque des revendications 9 à 13, **caractérisé en ce que**, à la suite de l'étape de sélection de média (350), l'appareil qui donne l'accès le plus direct ou le plus rapide au média sélectionné transmet ledit média à l'appareil sélectionné pour diffuser ledit média.

15. Dispositif d'échange de données entre des appareils (100, 120, 125, 130, 140, 145, 150, 155, 157, 160) reliés à un réseau (165), **caractérisé en ce qu'**il comporte, dans au moins deux desdits appareils :
- un moyen (102, 104) de recherche d'au moins un type de médias représentatifs d'au moins une entité physique, directement accessibles par ledit appareil ;
- un moyen (102, 112, 114) de transmission, à au moins un autre appareil susceptible de traiter ledit type de média, d'une liste représentative de médias trouvés sur ledit appareil par le moyen de recherche et
- un moyen (102, 104) d'agrégation des listes de médias trouvés et/ou reçues indépendamment de l'appareil où se trouvent lesdits médias.

16. Dispositif selon la revendication 15, **caractérisé en ce que** le moyen (102, 104) d'agrégation est adapté à ce que la liste agrégée soit rangée par entité physique.

17. Dispositif selon l'une quelconque des revendications 15 ou 16, **caractérisé en ce que** le moyen (102, 104) d'agrégation est adapté à ce que la liste agrégée soit rangée par type de média.

18. Dispositif selon l'une quelconque des revendications 15 à 17, **caractérisé en ce que** le moyen (102, 104) de recherche est adapté à ne pas prendre en compte les médias affectés d'une interdiction de diffusion.

19. Dispositif selon l'une quelconque des revendications 15 à 18, **caractérisé en ce que** le moyen (102, 104) d'agrégation est adapté à ce que la liste agrégée comporte, pour chaque média, un pointeur qui représente la localisation dudit média sur le réseau.

20. Dispositif selon l'une quelconque des revendications 15 à 19, **caractérisé en ce que** le moyen (102, 104) d'agrégation est adapté à ce que la liste agrégée comporte, pour chaque média, une interface susceptible de traiter ledit média.

21. Dispositif selon l'une quelconque des revendications 15 à 20, **caractérisé en ce qu'**il comporte un moyen (102, 104, 170) de sélection de l'appareil pour la diffusion d'un média.

22. Dispositif selon l'une quelconque des revendications 15 à 21, **caractérisé en ce qu'**il comporte un moyen (102, 104, 170) de sélection d'un média représenté dans la liste agrégée.

23. Dispositif selon la revendication 22, **caractérisé en ce que** ledit moyen (102, 104, 170) de sélection d'un média comporte une télécommande (170) manuelle.

24. Dispositif selon la revendication 23, **caractérisé en ce que** ladite télécommande (170) manuelle comporte un émetteur (210) de signaux lumineux et un émetteur (211) de signaux radios.

25. Dispositif selon l'une quelconque des revendications 23 ou 24, **caractérisé en ce que** la télécommande (170) manuelle est adaptée à afficher des images en trois dimensions représentatives des appareils (100, 120, 125, 130, 150, 155, 157, 160) susceptibles de diffuser au moins un type de média.

26. Dispositif selon l'une quelconque des revendications 23 à 25, **caractérisé en ce que** la télécommande (170) manuelle est adaptée à émettre une requête pour que chaque appareil (100, 120, 125, 130, 140, 145, 150, 155, 157, 160) à portée de la télécommande fournisse une réponse l'identifiant.

27. Dispositif selon l'une quelconque des revendications 23 à 26, **caractérisé en ce qu'**au moins un appareil (100, 120, 125, 130, 150, 155, 157, 160) est adapté à ce que la sélection d'un média met en oeuvre des touches de flèches et une touche de validation.

28. Dispositif selon l'une quelconque des revendications 15 à 27, **caractérisé en ce que**, lorsque la sélection d'un média concerne un média pour lequel l'appareil (100, 120, 125, 130, 140, 145, 150, 155, 157, 160) donne l'accès le plus direct ou le plus rapide audit média sélectionné, le moyen (102, 112, 114) de transmission est adapté à transmettre ledit média à appareil sélectionné pour diffuser ledit média.

## Claims

1. Process of exchanging data between devices linked to a network, comprising:
- a step of searching (320), by each of at least two devices, for at least one media type representing at least one type of physical entity, directly accessible by said device and
- a step of transmitting (335), by each device having carried out said search step to at least one other device capable of handling said media type, a list representing media found on said device during the search step;
**characterized in that** it further comprises:
- a step of aggregating (345), by each device having carried out said search, lists of media found and/or received independent of the device where said media are located.

2. Process according to claim 1, **characterized in that**, during the aggregation step (345), the aggregated lists are organized by physical entity.

3. Process according to either one of claims 1 or 2, **characterized in that**, during the aggregation step (345), the aggregated lists are organized by media type.

4. Process according to any one of claims 1 to 3, **characterized in that**, during the search step (320), media subject to a broadcast limitation or ban are not taken into account.

5. Process according to any one of claims 1 to 4, **characterized in that**, during the aggregation step (345), the aggregated list comprises, for each medium, a pointer representing the localization of said medium on the network.

6. Process according to any one of claims 1 to 5, **characterized in that**, during the aggregation step (345), the aggregated list comprises, for each medium, an interface capable of handling said medium.

7. Process according to any one of claims 1 to 6, **characterized in that** it comprises a step of selecting (360) a media output device.

8. Process according to any one of claims 1 to 7, **characterized in that** it comprises a step of selecting (350), for at least one media output device, a medium represented in the aggregated list.

9. Process according to claim 8, **characterized in that** the said step of selecting a medium (350) comprises a step of selection (351) by a hand-held remote control (170).

10. Process according to claim 9, **characterized in that**, during the step of selection via a hand-held remote control (351), optical signals and radio signals are output by said remote control.

11. Process according to any one of claims 9 or 10, **characterized in that**, during the step of selection via a hand-held remote control (351), three-dimensional images representing devices capable of outputting at least one media type are displayed, on said remote control.

12. Process according to any one of claims 9 to 11, **characterized in that**, during the step of selection via a hand-held remote control (351), a request is output for each device in the remote control's range to provide a response identifying it.

13. Process according to any one of claims 9 to 12, **characterized in that**, during the step of selection via a hand-held remote control (351), arrow keys and a confirmation key are utilized.

14. Process according to any one of claims 9 to 13, **characterized in that**, following the medium selection step (350), the device giving the most direct or quickest access to the selected medium transmits said medium to the device selected to output said medium.

15. Device for exchanging data between devices (100, 120, 125, 130, 140, 145, 150, 155, 157, 160) linked to a network (165), **characterized in that** it comprises, in at least two of said devices:
- a means (102, 104) of searching for at least one media type representing at least one physical entity, directly accessible by said device;
- a means (102, 112, 114) of transmitting, by at least one other device capable of handling said media type, a list representing media found on said device by the search means and
- a means (102, 104) of aggregating lists of media found and/or received independent of the device where said media are located.

16. Device according to claim 15, **characterized in that** the aggregation means (102, 104) is adapted so that the aggregated list is organized by physical entity.

17. Device according to either one of claims 15 or 16, **characterized in that** the aggregation means (102, 104) is adapted so that the aggregated list is organized by media type.

18. Device according to any one of claims 15 to 17, **characterized in that** the search means (102, 104) is adapted to not take into account media subject to a broadcast ban.

19. Device according to any one of claims 15 to 18, **characterized in that** the aggregation means (102, 104) is adapted so that the aggregated list comprises, for each medium, a pointer which represents the localization of said medium on the network.

20. Device according to any one of claims 15 to 19, **characterized in that** the aggregation means (102, 104) is adapted so that the aggregated list comprises, for each medium, an interface capable of handling said medium.

21. Device according to any one of claims 15 to 20, **characterized in that** it comprises a means (102, 104, 170) of selecting the device for outputting a medium.

22. Device according to any one of claims 15 to 21, **characterized in that** it comprises a means (102, 104, 170) of selecting a medium represented in the aggregated list.

23. Device according to claim 22, **characterized in that** said means (102, 104, 170) of selecting a medium comprises a hand-held remote control (170).

24. Device according to claim 23, **characterized in that** said hand-held remote control (170) comprises an optical signal emitter (210) and a radio signal emitter (211).

25. Device according to any one of claims 23 or 24, **characterized in that** the hand-held remote control (170) is adapted to display three-dimensional images representing devices (100, 120, 125, 130, 150, 155, 157, 160) capable of outputting at least one media type.

26. Device according to any one of claims 23 to 25, **characterized in that** the hand-held remote control (170) is adapted to output a request for each device (100, 120, 125, 130, 140, 145, 150, 155, 157, 160) in the remote control's range to provide a response identifying it.

27. Device according to any one of claims 23 to 26, **characterized in that** at least one device (100, 120, 125, 130, 150, 155, 157, 160) is adapted so that the selection of a medium utilizes arrow keys and a confirmation key.

28. Device according to any one of claims 15 to 27, **characterized in that**, where the selection of a medium involves a medium for which the device (100, 120, 125, 130, 140, 145, 150, 155, 157, 160) gives the most direct or quickest access to said selected medium, the means (102, 112, 114) of transmission is adapted to transmit said medium to the device selected to output said medium.

## Patentansprüche

1. Verfahren zum Datenaustausch zwischen an ein Netz angeschlossenen Geräten mit:
- einer Etappe für die Suche (320) jedes einzelnen von mindestens zwei Geräten nach mindestens einer Art bezeichnendes Kommunikationsmittel mindestens eines physikalischen Objekts, die für das besagte Gerät direkt zugänglich sind, und
- einer Etappe für die Übertragung (335) von jedem Gerät, das die besagte Suchetappe zurückgelegt hat, an mindestens ein anderes Gerät, das in der Lage ist, die besagte Art von Kommunikationsmittel zu bearbeiten, einer bezeichnenden Liste von Kommunikationsmitteln, die bei der Suche an dem besagten Gerät gefunden wurden;
**dadurch gekennzeichnet, dass** er darüber hinaus:
- eine Etappe für die Aggregation (345) der Listen der gefundenen bzw. empfangenen Kommunikationsmittel, unabhängig von dem Gerät, an dem sich die besagten Kommunikationsmittel befinden, durch jedes Gerät enthält, das die besagte Suchetappe zurückgelegt hat.

2. Verfahren nach Anspruch 1, **dadurch gekennzeichnet, dass** während der Aggregationsetappe (345) die aggregierten Listen nach physikalischen Objekten geordnet werden.

3. Verfahren nach Anspruch 1 oder 2, **dadurch gekennzeichnet, dass** während der Aggregationsetappe (345) die aggregierten Listen nach Art des Kommunikationsmittels geordnet werden.

4. Verfahren nach einem Anspruch 1 bis 3, **dadurch gekennzeichnet, dass** während der Suchetappe (320) die mit einem Übertragungsverbot oder einer Übertragungsbeschränkung belegten Kommunikationsmittel nicht berücksichtigt werden.

5. Verfahren nach einem Anspruch 1 bis 4, **dadurch gekennzeichnet, dass** während der Aggregationsetappe (345) die aggregierte Liste für jedes Kommunikationsmittel einen Zeiger enthält, der die Lokalisierung des besagten Kommunikationsmittels im Netz darstellt.

6. Verfahren nach einem Anspruch 1 bis 5, **dadurch gekennzeichnet, dass** während der Aggregationsetappe (345) die aggregierte Liste für jedes Kommunikationsmittel eine Schnittstelle enthält, die in der Lage ist, das besagte Kommunikationsmittel zu bearbeiten.

7. Verfahren nach einem Anspruch 1 bis 6, **dadurch gekennzeichnet, dass** es eine Etappe für die Auswahl (360) eines Gerätes zur Übertragung eines Kommunikationsmittels enthält.

8. Verfahren nach einem Anspruch 1 bis 7, **dadurch gekennzeichnet, dass** es eine Auswahletappe (350) für mindestens ein Gerät zur Übertragung eines in der aggregierten Liste enthaltenen Kommunikationsmittels enthält.

9. Verfahren nach Anspruch 8, **dadurch gekennzeichnet, dass** die besagte Kommunikationsmittel-Auswahletappe (350) eine Auswahletappe (351) mit Hilfe einer manuellen Fernsteuerung (170) beinhaltet.

10. Verfahren nach Anspruch 9, **dadurch gekennzeichnet, dass** während der Auswahletappe mit Hilfe einer manuellen Fernsteuerung (351) Licht- und Funksignale an die besagte Fernsteuerung gesendet werden.

11. Verfahren nach Anspruch 9 oder 10, **dadurch gekennzeichnet, dass** während der Auswahletappe mit Hilfe einer manuellen Fernsteuerung (351) auf der besagten Fernsteuerung dreidimensionale Bilder der Geräte dargestellt werden, die in der Lage sind, mindestens eine Art des Kommunikationsmittels zu übertragen.

12. Verfahren nach einem Anspruch 9 bis 11, **dadurch gekennzeichnet, dass** während der Auswahletappe mit Hilfe einer manuellen Fernsteuerung (351) ein Befehl gegeben wird, damit jedes Gerät in Reichweite der Fernsteuerung so reagiert, dass es identifiziert werden kann.

13. Verfahren nach einem Anspruch 9 bis 12, **dadurch gekennzeichnet, dass** während der Auswahletappe mit Hilfe einer manuellen Fernsteuerung (351) die Pfeiltasten und eine Bestätigungstaste betätigt werden,

14. Verfahren nach einem Anspruch 9 bis 13, **dadurch gekennzeichnet, dass** nach der Kommunikationsmittel-Auswahletappe (350) das Gerät, welches dem gewählten Kommunikationsmittel den direktesten oder schnellsten Zugriff ermöglicht, das besagte Kommunikationsmittel an das für seine Übertragung gewählte Kommunikationsmittel überträgt.

15. Vorrichtung für den Datenaustausch zwischen an ein Netz (165) angeschlossenen Geräten (100, 120, 125, 130, 140, 145, 150, 155, 157, 160), **dadurch gekennzeichnet, dass** sie in mindestens zwei der besagten Geräte:
- ein Mittel (102, 104) für die Suche nach mindestens einer Art bezeichnender Kommunikationsmittel mindestens eines physikalischen Objekts beinhaltet, die diesem Gerät direkt zugänglich sind;
- ferner ein Mittel (102, 112, 114) für die Übertragung einer bezeichnenden Liste der unter Einsatz der Suchmittel an dem besagten Gerät gefundenen Kommunikationsmittel an mindestens ein weiteres Gerät, das in der Lage ist, die besagte Art von Kommunikationsmittel zu bearbeiten, sowie
- ein Mittel (102, 104) für die Aggregation der Listen der gefundenen bzw. empfangenen Kommunikationsmittel, unabhängig von dem Gerät, an dem sich die besagten Kommunikationsmittel befinden.

16. Vorrichtung nach dem Anspruch 15, **dadurch gekennzeichnet, dass** das Aggregationsmittel (102, 104) so ausgelegt ist, dass die aggregierte Liste nach physikalischen Objekten geordnet werden kann.

17. Vorrichtung nach Anspruch 15 oder 16, **dadurch gekennzeichnet, dass** das Aggregationsmittel (102, 104) so ausgelegt ist, dass die aggregierte Liste nach Art des Kommunikationsmittels geordnet ist.

18. Vorrichtung nach einem Anspruch 15 bis 17, **dadurch gekennzeichnet, dass** das Suchmittel (102, 104) so ausgelegt ist, dass die mit einem Übertragungsverbot belegten Kommunikationsmittel nicht berücksichtigt werden.

19. Vorrichtung nach einem Anspruch 15 bis 18, **dadurch gekennzeichnet, dass** das Aggregationsmittel (102, 104) so ausgelegt ist, dass die aggregierte Liste für jedes Kommunikationsmittel einen Zeiger enthält, der die Lokalisierung des besagten Kommunikationsmittels im Netz darstellt.

20. Vorrichtung nach einem Anspruch 15 bis 19, **dadurch gekennzeichnet, dass** das Aggregationsmittel (102, 104) so ausgelegt ist, dass die aggregierte Liste für jedes Kommunikationsmittel eine Schnittstelle enthält, die in der Lage ist, das besagte Kommunikationsmittel zu bearbeiten,

21. Vorrichtung nach einem Anspruch 15 bis 20, **dadurch gekennzeichnet, dass** sie ein Mittel (102, 104, 170) zur Auswahl des Gerätes für die Übertragung eines Kommunikationsmittels beinhaltet.

22. Vorrichtung nach einem Anspruch 15 bis 21, **dadurch gekennzeichnet, dass** sie ein Mittel (102, 104, 170) zur Auswahl eines Kommunikationsmittels aus der aggregierten Liste beinhaltet.

23. Vorrichtung nach Anspruch 22, **dadurch gekennzeichnet, dass** das besagte Mittel (102, 104, 170) zur Auswahl eines Kommunikationsmittels eine manuelle Fernsteuerung (170) beinhaltet.

24. Vorrichtung nach Anspruch 23, **dadurch gekennzeichnet, dass** die besagte manuelle Fernsteuerung (170) einen Sender (210) für Lichtsignale und einen Sender (211) für Funksignale beinhaltet.

25. Vorrichtung nach Anspruch 23 oder 24, **dadurch gekennzeichnet, dass** die manuelle Fernsteuerung (170) so ausgelegt ist, dass darauf dreidimensionale Bilder der Geräte (100, 120, 125, 130, 150, 155, 157, 160) dargestellt werden, die in der Lage sind, mindestens eine Art von Kommunikationsmittel zu übertragen.

26. Vorrichtung nach einem Anspruch 23 bis 25, **dadurch gekennzeichnet, dass** die manuelle Fernsteuerung (170) so ausgelegt ist, dass ein Befehl für jedes Gerät (100, 120, 125, 130, 140, 145, 150, 155, 157, 160) gegeben wird, damit jedes Gerät in Reichweite der Fernsteuerung so reagiert, dass es identifiziert werden kann.

27. Vorrichtung nach einem Anspruch 23 bis 26, **dadurch gekennzeichnet, dass** mindestens ein Gerät (100, 120, 125, 130, 150, 155, 157, 160) so ausgelegt ist, dass für die Auswahl eines Kommunikationsmittels Pfeiltasten und eine Bestätigungstaste betätigt werden.

28. Vorrichtung nach einem Anspruch 15 bis 27, **dadurch gekennzeichnet, dass**, wenn die Auswahl eines Kommunikationsmittels ein Kommunikationsmittel betrifft, für welches das Gerät (100, 120, 125, 130, 140, 145, 150, 155, 157, 160) den direktesten oder schnellsten Zugriff auf das gewählte Kommunikationsmittel ermöglicht, das Übertragungsmittel (102, 112, 114) so ausgelegt ist, das das besagte Kommunikationsmittel an das gewählte Geräte übertragen wird, um das besagte Kommunikationsmittel zu übertragen,
